# EUROPÄISCHE PATENTSCHRIFT

(11) **EP 1 831 580 B1**
(45) Veröffentlichungstag und Bekanntmachung des Hinweises auf die Patenterteilung: **03.12.2008**
(21) Anmeldenummer: 05818925.9
(22) Anmeldetag: 16.11.2005
(51) Int. Cl.: F16F 9/02, F16F 9/32, B60G 17/052

(54) **GASFEDER-DÄMPFER-EINHEIT**
GAS SPRING/DAMPER UNIT
UNITE D'AMORTISSEUR/RESSORT A GAZ

(30) Priorität: 14.12.2004 DE 102004060002
(43) Veröffentlichungstag der Anmeldung: 12.09.2007
(73) Patentinhaber: Continental Aktiengesellschaft, D-30165 Hannover (DE)
(72) Erfinder: BEHMENBURG, Christof, 31867 Lauenau (DE); JOB, Heinz, 31535 Neustadt (DE); ENGELKE, Thomas, 30159 Hannover (DE); KOCK, Jörg, 30938 Burgwedel (DE); HOINKHAUS, Hermann, 30938 Burgwedel (DE)
(74) Vertreter: Finger, Karsten
(86) Internationale Anmeldenummer: PCT/EP2005/012276
(87) Internationale Veröffentlichungsnummer: WO 2006/063647

(56) Entgegenhaltungen:
- EP-A- 0 257 779
- EP-A- 1 464 865
- DE-A1- 4 334 007
- DE-C1- 10 005 180
- DE-C1- 10 135 261

## Beschreibung

Die Erfindung betrifft eine Gasfeder-Dämpfer-Einheit mit zumindest einem verschieblich gelagerten Verdrängerkolben und zwei Verdrängerkammern, deren Volumen sich je nach Verschieberichtung des Verdrängerkolbens vergrößert oder verkleinert und die über Überströmkanäle, in denen Drosselventile angeordnet sind, miteinander verbunden sind.

Aus der DE 43 34 007 A1 ist eine pneumatische Feder-Dämpfer-Einheit mit elektromagnetisch steuerbaren Überströmventilen bekannt, deren Verschlussorgane durch Ventilfederplättchen gebildet werden. Durch die Ventilfederplättchen verläuft der magnetische Fluss und die Ventilfederplättchen wirken in ihrer Schließlage mit zugeordneten Anlageflächen zusammen. Die Schließkraft ist durch einen steuerbaren Elektromagneten veränderbar, so dass eine Feder-Dämpfer-Einheit mit veränderlicher Abstimmung vorliegt. Mit dieser Feder-Dämpfer-Einheit ist es möglich, die maximale Schließkraft oder Vorspannung einzustellen und zu bestimmen, ab welchem Druck das Ventil öffnet.

Aus der DE 101 35 261 C1 ist eine Gasfeder-Dämpfer-Einheit mit Überströmdrosseln bekannt, die mit federnden Dichtscheiben verschlossen sind. Die federnden Dichtscheiben sind nicht fest eingespannt, sondern durch eine Federkraft nur für einen vorbestimmten Druckdifferenzbereich festgelegt. Nach Überschreiten eines bestimmten Druckes hebt der Einspannbereich ab, wobei die federnde Kraft zur Belastung der Dichtscheibe vorzugsweise durch eine ebenfalls federnde Ringscheibe aufgebracht wird.

Aufgabe der vorliegenden Erfindung ist es, eine Gasfeder-Dämpfer-Einheit bereitzustellen, die einfach aufgebaut ist und einfach an die gewünschte Federungscharakteristik angepasst werden kann.

Erfindungsgemäß wird diese Aufgabe durch eine Gasfeder-Dämpfer-Einheit mit den Merkmalen des Anspruches 1 gelöst, bei der mehrere Drosselventile mit einer unterschiedlichen Ventilcharakteristik in einer Strömungsrichtung wirksam angeordnet sind, wobei ein Drosselventil für eine Dämpfung von Eigenfrequenzen im Bereich von 1 bis 1,5 Hz und ein anderes Drosselventil für eine Dämpfung von Eigenfrequenzen im Bereich von 10 bis 40 Hz ausgelegt ist. Durch die Kombination mehrerer Drosselventile in einer Strömungsrichtung mit unterschiedlicher Ventilcharakteristik, also mit unterschiedlichen Öffnungszeitpunkten, Strömungsquerschnitten und Strömungswiderständen, ist es auf einfache Art und Weise möglich, eine Gasfeder-Dämpfer-Einheit zusammenzustellen, die für den jeweiligen Einsatzzweck optimal angepasst ist. So ist es beispielsweise möglich, auch bei niedrigen Dämpfergeschwindigkeiten eine relativ hohe Dämpfung bereitzustellen, um bei einem Einsatz in Fahrzeugen den Fahrzeugaufbau, der eine Eigenfrequenz im Bereich von1 bis 1,5 Hz hat, zu beruhigen. Während des Normalbetriebes und bei Auftreten höherer Dämpfergeschwindigkeiten kann das Verhältnis von Dämpferkraft und Dämpfergeschwindigkeit verändert werden, um ein gewünschtes Fahrverhalten zu erzielen. Bei Überschreiten einer festgelegten Geschwindigkeit oder anderer Parameter kann ein weiteres Ventil, das beispielsweise für die Dämpfung der Fahrzeugachse, die eine Eigenfrequenz in einem Bereich von 10 bis 40 Hz hat, zuständig ist, öffnen und die Dämpferkraft begrenzen. Somit ist es möglich, die Dämpferkraftkennlinie auch für große Dämpfergeschwindigkeiten anzupassen, wobei eine Anpassung der Aufbaubedämpfung bei Fahrzeugen nicht automatisch zu einer sehr steilen Kennlinie bei höheren Geschwindigkeiten und damit automatisch zu einer nicht mehr anpassbaren Änderung der Achsdämpfung, also der Dämpfung höherer Frequenzen führen muss.

Eine Weiterbildung der Erfindung sieht vor, dass die Drosselventile, die jeweils in einer Strömungsrichtung wirksam sind, bei unterschiedlichen Strömungsdrücken öffnen, also die Ventilkörper, die unter einer Vorspannung stehen, zu unterschiedlichen Zeitpunkten öffnen und Überströmkanäle freigeben. Dadurch wird gewährleistet, dass bis zu einem bestimmten Strömungsdruck nur ein Teil der Überströmkanäle freigegeben wird, so dass das maximale Strömungsvolumen begrenzt bleibt.

Um eine unterschiedliche Dämpfercharakteristik für die Zug- und Druckstufe bereitzustellen, weisen die Drosselventile für die Zug- und Druckstufe jeweils unterschiedliche Strömungsquerschnitte auf, insbesondere sind die Drosselventile für die Druckstufe größer als die für die Zugstufe, um eine größere Dämpfung in der Zugstufe zu bewirken.

Eine Weiterbildung der Erfindung sieht vor, dass das Dämpfersystem auf einer Vorspannungsadaption beruht, also dass die Drosselventile entgegen dem Strömungsdruck federnd gelagert sind und solange geschlossen bleiben, bis ein bestimmter Strömungsdruck erreicht wird. Die Drosselventile öffnen also erst ab Erreichen eines bestimmten Strömungsdruckes und lassen die Luft oder das Gas aus der einen Verdrängerkammer in die andere strömen. Dies kann beispielsweise dadurch erfolgen, dass die in einer gemeinsamen Strömungsrichtung wirksamen Drosselventile eine unterschiedliche Federvorspannung aufweisen, während die übrigen geometrischen Abmessungen gleich sind. Alternativ kann bei gleicher Federvorspannung und unterschiedlichen geometrischen Abmessungen ein aufeinander abfolgendes Öffnen der verschiedenen Ventile in einer gemeinsamen Strömungsrichtung erfolgen.

Eine einfache Art und Weise, die Ventile unter Vorspannung geschlossen zu halten, besteht darin, dass die Drosselventile über Schraubenfedern oder Spiralfedern mit Axialausdehnung in entsprechende Ventilsitze gedrückt werden.

Eine vorteilhafte Ausgestaltung der Erfindung sieht vor, dass der Verdrängerkolben als ein doppelt wirkender Verdrängerkolben ausgebildet ist, der verschieblich in einem Zylinder gelagert ist. Wird der Verdrängerkolben in eine Richtung bewegt, verkleinert sich das Volumen der in Bewegungsrichtung liegenden Verdrängerkammer, während sich das Volumen der anderen Verdrängerkammer entsprechend erhöht. Dadurch wird der bauliche Aufwand verringert, da nur ein Zylinder mit einer Kolbenstange und einem Kolben vorgesehen werden muss. Grundsätzlich besteht jedoch auch die Möglichkeit, zwei oder mehr Zylinder und Kolben vorzusehen und die Drosselventile in Verbindungsleitungen oder Überströmkanälen anzuordnen. Eine besonders kompakte Ausführung einer Gasfeder-Dämpfer-Einheit erhält man, wenn die Drosselventile innerhalb des Verdrängerkolbens gelagert sind, wobei die Möglichkeit besteht, die einzelnen Ventile mit Ventilsätzen, Feder und Ventilplatten oder Ventilkörper als eine Baueinheit vorzusehen und in den Verdrängerkolben einzusetzen. Ebenfalls ist es möglich, Module mit mehreren Ventilen mit unterschiedlichen Ventilcharakteristiken in den Verdrängerkolben einzusetzen, beispielsweise vier Drosselventil-Module, von denen zwei in Druckrichtung und zwei in Zugrichtung ausgerichtet sind.

Manche Drosselventile öffnen erst ab einer bestimmten Verstellgeschwindigkeit. Auch bei sehr langsamen Anregungen ist es häufig gewünscht, geringe Dämpferkräfte vorzusehen. Um dieses zu erreichen, ist zwischen den Verdrängerkammern zumindest ein Bypass ausgebildet, der für einen Durchtritt einer geringen Gasmenge von der einen Verdrängerkammer in die andere Verdrängerkammer vorgesehen ist. Der Bypass bildet dabei die Reibung nach, die in einem herkömmlichen Dämpfer vorhanden ist und ermöglicht zudem eine Niveauanpassung, indem die Gesamtgasmenge erhöht oder verringert und somit das Niveau angehoben oder abgesenkt werden kann. Der Bypass kann ebenfalls in einem Drosselventil oder in einem Modul aus mehreren Drosselventilen ausgebildet sein.

Um eine separate Einstellung der Dämpfercharakteristik hinsichtlich der Zug- oder Druckstufe vornehmen zu können, ist je Strömungsrichtung ein Bypass ausgebildet, der auch nur in dieser Richtung wirksam ist. Entgegen dieser Strömungsrichtung kann der Bypass durch eine leichtgängige Klappe verschlossen werden. Dabei ist es vorgesehen, dass der Bypass in der einen Strömungsrichtung einen größeren Strömungsquerschnitt als der Bypass in der anderen Strömungsrichtung aufweist, vorzugsweise wird der Bypass in Druckrichtung einen größeren Strömungsquerschnitt als der in Zugrichtung aufweisen.

Eine Weiterbildung der Erfindung sieht vor, dass zumindest eine Verstelleinrichtung zur Einstellung der Ventilcharakteristik, insbesondere der Vorspannung zumindest eines Drosselventils, vorgesehen ist, um das Drosselsystem der Gasfeder-Dämpfer-Einheit unmittelbar beeinflussen zu können. Im eingebauten Zustand kann somit die Dämpfercharakteristik der Gasfeder-Dämpfer-Einheit verändert und so das Fahrwerk eines Fahrzeuges an die Anforderungen bei sich verändernden Umgebungsbedingungen angepasst werden. Durch eine Veränderung der Vorspannung, beispielsweise des Dämpferkraftbegrenzungsventils, dem sogenannten "Blow off"-Ventil, kann die maximal erreichbare Dämpferkraft erhöht oder verringert werden.

Zur Nachbildung der Reibung bei einer Gasfeder-Dämpfer-Einheit, wie sie bei ölhydraulischen Dämpfern durch das Bypass-Ventil realisiert wird, ist ein weiteres Drosselventil vorgesehen, dessen Charakteristik, also der Öffnungszeitpunkt und der Öffnungsweg oder Öffnungswinkel verändert werden kann, um eine größere oder kleinere Dämpfung bei der Gasfeder-Dämpfer-Einheit verwirklichen zu können. Die Veränderung der Ventilcharakteristik wird bevorzugt durch eine Verstelleinrichtung bewirkt, die dem oder den Drosselventilen zugeordnet ist.

Die Verstelleinrichtung weist in einer Ausgestaltung einen elektromechanischen Aktuator auf, um die Ventilcharakteristik direkt beeinflussen zu können und so die Verstellgeschwindigkeit zu erhöhen. Eine Verstellung kann beispielsweise dadurch erfolgen, dass der Ventilfeder für ein Drosselventil ein Fremdkraft betätigter Stellmechanismus zugeordnet ist, über den die Federvorspannung veränderbar ist. Die erfolgt beispielsweise, indem über eine Stellschraube oder eine Stellmutter die Federvorspannung erhöht oder verringert wird, so dass das entsprechende Ventil später oder früher öffnet.

Die zweite Möglichkeit, die Dämpfung zu verstellen, besteht darin, die Größe der Anströmfläche zu variieren und dadurch den zur Öffnung notwendigen Druck zu verändern. Ein weiteres Prinzip ist die Regelung der Luftmenge durch einen Schieber einer zweiten, parallel geschalteten Drosseleinheit je Strömungsrichtung. Die parallel geschaltete Drossel kann zusätzlich individuell bestückt werden.

Nachfolgend wird ein Ausführungsbeispiel der Erfindung anhand der beigefügten Figuren näher beschrieben.

Es zeigen:
- Figur 1 -: den prinzipiellen Aufbau einer Gasfeder-Dämpfer-Einheit;
- Figur 2 -: einen Dämpferkennlinienverlauf;
- Figur 3 -: den prinzipiellen Aufbau einer Schraubenfederdrossel;
- Figuren 4a bis 4c-: Komponenten einer Dämpfer-Einheit;
- Figur 5 -: eine Ringscheibendrossel;
- Figur 6 -: eine Lineardrossel;
- Figur 7 -: eine Degressivdrossel;
- Figur 8 -: Dämpferkennlinienverläufe bei unterschiedlicher Ventilfedervorspannung;
- Figur 8a -: ein Kraftlinienkennfeld;
- Figur 9 -: eine Variante einer Schraubenfederdrossel; und
- Figur 10 -: ein Drosselmodul.

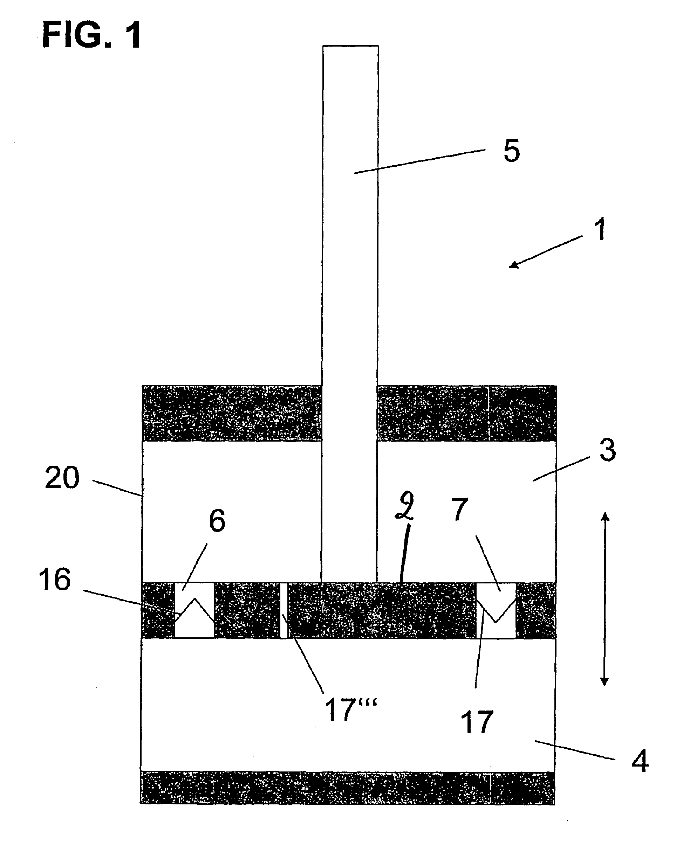

In der Figur 1 ist eine Gasfeder-Dämpfer-Einheit 1 schematisch in Schnittdarstellung gezeigt, bei der ein verschieblich gelagerter Verdrängerkolben 2 in einem Zylinder 20 zwei Verdrängerkammern 3, 4 ausbildet. Der Verdrängerkolben 2 ist über eine Kolbenstange 5 mit Kraft beaufschlagbar, so dass eine Bewegung in Doppelpfeilrichtung erfolgen kann. Wird in der vorliegenden Figur der Verdrängerkolben 2 über eine Krafteinleitung durch die Kolbenstange 5 nach unten gedrückt, verringert sich das Volumen der Verdrängerkammer 4 in dem Maße, wie sich das Volumen der Verdrängerkammer 3 vergrößert, abzüglich des verschobenen Volumens der Kolbenstange 5.

Innerhalb des Verdrängerkolbens 2 sind Überströmkanäle 6, 7 ausgebildet, die einen Durchtritt des in den Verdrängerkammern 3, 4 befindlichen Gases, vorzugsweise Luft, von der einen Verdrängerkammer 3, 4 in die jeweils andere Verdrängerkammer 4, 3 ermöglichen. In den Überströmkanälen 6, 7 sind Drosselventile 16, 17 angeordnet, die eine Durchströmung des Gases in jeweils einer Richtung gestatten und in der anderen sperren.

Ebenfalls ist in dem Verdrängerkolben 2 ein Bypass 17"' ausgebildet, durch den das in den Verdrängerkammern 3, 4 vorhandene Gas hindurchströmen kann, so dass auch bei niedrigen Durchströmvolumina eine gewisse Beweglichkeit des Verdrängerkolbens 2 bei gleichzeitiger Dämpfung gewährleistet ist.

Um richtungsabhängig unterschiedliche Gasmengen durch den Bypass 17"' hindurchtreten lassen zu können, können mehrere Bypässe in dem Verdrängerkolben 2 ausgebildet sein, die mit entsprechenden Klappen verschlossen sind, so dass bei einer Abwärtsbewegung, der sogenannten Druckstufe, des Verdrängerkolbens 2 ein anderer Bypass aktiviert wird als bei einer Aufwärtsbewegung, der sogenannten Zugstufe.

Um eine angepasste Dämpferkennlinie der Gasfeder-Dämpfer-Einheit 1 bereitstellen zu können, sind die Drosselventile 16, 17 jeweils mit einer unterschiedlichen Ventilcharakteristik versehen, so dass für die Zug- und Druckstufe unterschiedliche Dämpferkennlinien verwirklicht werden können. Ebenfalls ist vorgesehen, dass diejenigen Drosselventile 16, 17, die in einer Strömungsrichtung wirksam angeordnet sind, unterschiedliche Ventilcharakteristiken aufweisen, um eine fein abgestimmte Dämpferkennlinie zu erhalten, so dass beispielsweise bei geringeren Dämpfergeschwindigkeiten eine relativ hohe Dämpfung bereitgestellt wird, während bei relativ hohen Dämpfergeschwindigkeiten andere Ventile öffnen, die die Dämpferkraft begrenzen. Ebenfalls ist es möglich, ein sogenanntes "Blow-off"-Ventil vorzusehen, dass die maximale Dämpferkraft begrenzt und für hohe Eigenfrequenzen zwischen 10 und 40 Hz ausgelegt ist.

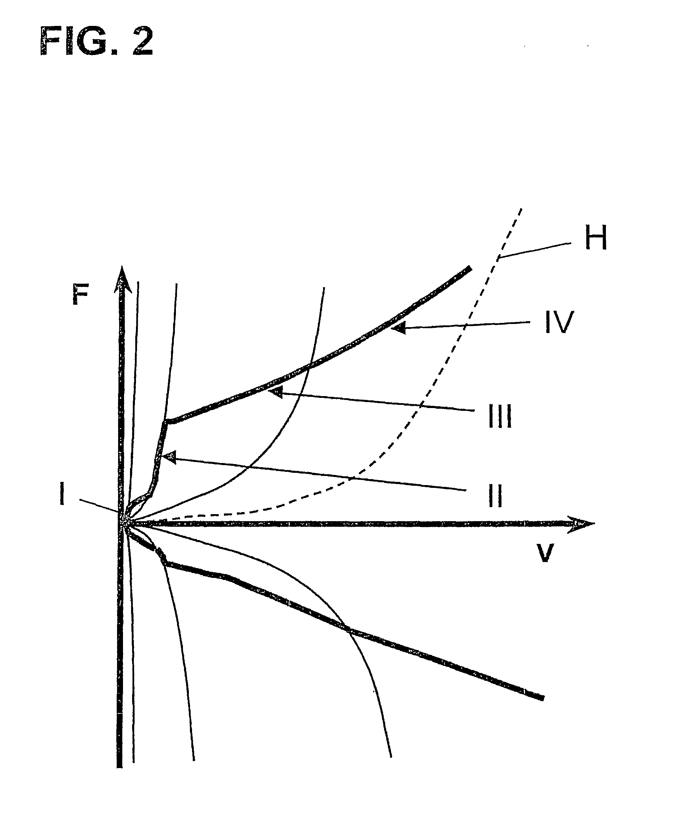

In der Figur 2 ist eine beispielhafte Dämpferkraftkennlinie gezeigt, bei der die Kraft F über die Dämpfergeschwindigkeit V aufgetragen ist. In dem Diagramm sind vier Bereiche zu erkennen, bei der im ersten Bereich I die Kraft-Geschwindigkeitscharakteristik durch den Bypass 17"' maßgeblich beeinflusst wird, der einen sehr kleinen Strömungsquerschnitt aufweist und die beiden Verdrängerkammern 3, 4 zur Nachbildung der Reibung miteinander verbindet. Bei etwas größeren Dämpfergeschwindigkeiten tritt wirksam ein Komfort-Ventil hinzu, das wesentlich für den Bereich II der Dämpferkraftkennlinie verantwortlich ist. Dies Komfortventil ist beispielsweise ein weiterer Bypass, der mit einer unter Vorspannung stehenden Verschlussklappe versehen und weist einen größeren Strömungsquerschnitt als der Bypass 17"' auf. Bei weiter steigender Dämpfergeschwindigkeit wird ein zweites, mit Vorspannung versehenes Ventil für den dritten Bereich III zugeschaltet, das sogenannte Aufbauventil, das vorzugsweise als ein Schraubenfederventil ausgeführt ist. Das Aufbauventil dämpft die Schwingungen im Bereich der Aufbaueigenfrequenzen zwischen 1 und 1,5 Hz, die überwiegend in vertikaler Richtung wirken. Durch die Zuschaltung des Aufbauventiles wird die Steigung der Federkraftkennlinie verringert. Um die Schwingungen insbesondere der Fahrzeugachse zu dämpfen und um maximale Dämpferkraft zu begrenzen, wird im vierten Abschnitt IV ein Blow-off-Ventil zugeschaltet, das im Bereich von Eigenfrequenzen zwischen 10 und 40 Hz wirksam ist. Die Kraftverlaufskurve nähert sich bei steigender Geschwindigkeit der Hüllkurve H an, die die Dämpferkraft F ohne geschlossene Ventile darstellt, als wenn sämtliche Ventile in maximal geöffneter Stellung befindlich wären.

Der Figur 2 ist zu entnehmen, dass oberhalb der Abszisse die Dämpferkraft für die Zugstufe aufgetragen ist und unterhalb der Abszisse die Dämpferkraft für die Druckstufe. Dem Diagramm ist ferner zu entnehmen, dass die Zugstufe und die Druckstufe unterschiedliche Dämpferkraftkennlinien aufweisen, also dass die jeweiligen Drosselventile oder Bypässe unterschiedliche Ventilcharakteristiken bzw. Strömungsquerschnitte oder Vorspannungen aufweisen. Dabei ist es vorgesehen, dass das Aufbauventil als ein Schraubenfederventil ausgeführt ist, das einfach durch einen elektrischen Aktuator in seiner Vorspannung verstellt werden kann, um so die Gasfeder-Drossel-Einheit unmittelbar zu beeinflussen und die Dämpferkraftliniencharakteristik im Bereich der Eigenfrequenz des Aufbaues, also bei ungefähr 1 bis 1,5 Hz zu verändern. Alle vorgespannten Ventile können mit einem Aktuator gekoppelt sein, der die Vorspannung nach den jeweiligen Anforderungen verändert. Durch die unmittelbare Verstellung der Ventile, also neben dem Aufbauventil auch das Komfortventil und/oder das Blow-off-Ventil, kann eine sehr schnelle Verstellung der Dämpferkennlinie bei einem niedrigen Preis erreicht werden. Neben einem Schraubenventil kann das Blow-off-Ventil auch als ein Federscheibenventil ausgeführt sein. Sollte das Komfort-Ventil als ein Federscheibenventil ausgeführt sein, kann dieses auch in dem Blow-off-Ventil integriert werden.

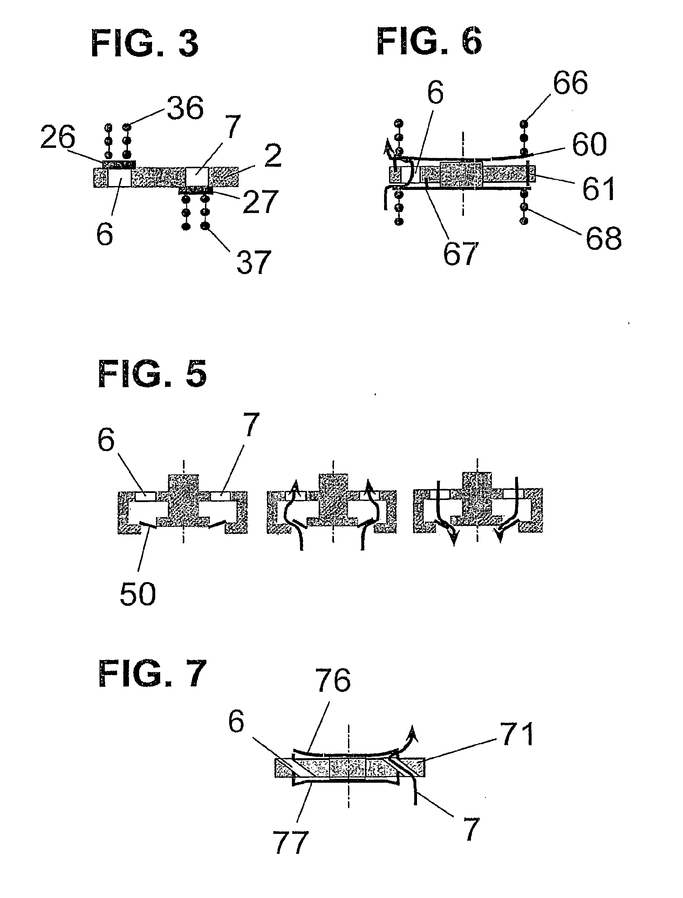

Die Figur 3 zeigt den grundsätzlichen Aufbau einer Ventillösung für Schraubenfederdrosseln, bei der die Überströmkanäle 6, 7 innerhalb des Verdrängerkolbens 2 über Ventilplättchen 26, 27 verschlossen sind, die über Schraubenfedern 36, 37 in ihren Ventilsitzen eingepresst sind. Je nach Bewegung des Verdrängerkolbens 2 werden die Ventilplättchen 26, 27 aus dem Ventilsitz herausgehoben und gegen die Vorspannung der jeweiligen Druckfeder 36, 37 bewegt. Bei größeren Verstellgeschwindigkeiten V erhöht sich der Druck und damit die Kraft, die von den Ventilplättchen 26, 27 auf die Schraubenfedern 36, 37 ausgeübt wird, so dass diese zusammengedrückt und die Ventilplättchen 26, 27 angehoben werden. Je nach Ausgestaltung sowohl des Querschnittes der Überstromkanäle 6, 7, der Größe der Ventilplättchen 26, 27 und der Vorspannung der Schraubenfedern 36, 37 können unterschiedliche Ventilcharakteristika in einer Strömungsrichtung oder für die Zug- oder Druckstufe verschieden ausgebildet sein.

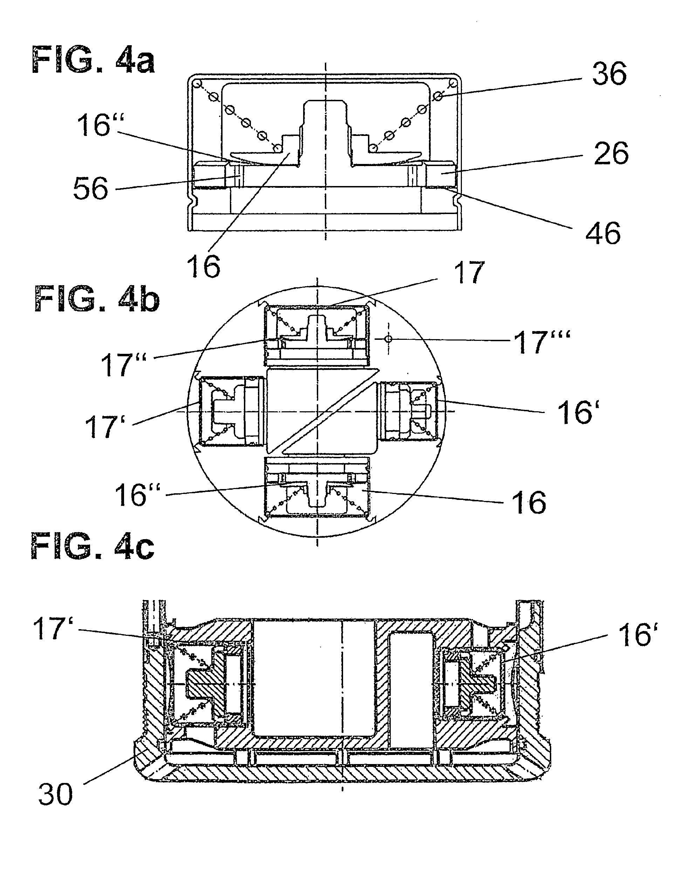

In den Figuren 4a bis 4c ist ein beispielhaftes Montagekonzept und eine Gasfeder-Dämpfer-Anordnung gezeigt.

Figur 4a zeigt ein Schraubenfederventil 16 als Aufbauventil mit einem Ventilplättchen 26, das über eine sich axial erstreckende Spiralfeder 36 in dem Ventilsitz 46 gehalten ist. Eine Bohrung 56 wird durch eine vorgespannte Federplatte verschlossen und bildet das Komfortventil 16", wobei die Bohrung einen Durchmesser typischerweise zwischen 2 und 6 mm aufweist. Die exakten Durchmesser bestimmen sich nach den weiteren Fahrzeugparametern. Nicht dargestellt ist der Bypass 17"', der in einem anderen Ventilgehäuse untergebracht ist; ebenso fehlt das Blow-off-Ventil 16', das eine eigenständige Komponente bildet.

Ein analoger Aufbau der jeweiligen Ventile 16, 16', 16", 17, 17', 17" ist in der Figur 4b gezeigt, wobei drei Ventile 16, 16', 16" für die Druckstufe vorhanden sind, während die Ventile 17, 17', 17" für die Zugstufe wirksam geschaltet sind. Die Blow-off-Ventile 16', 17' sind als separate Ventile ausgebildet, können aber auch in das Aufbauventil 16, 17 integriert sein. Die Ventile 16, 16', 16", 17, 17', 17" für die Druck- und Zugstufe sind je Strömungsrichtung unterschiedlich dimensioniert. Die Bohrung 17"' bildet einen Bypass und damit ein viertes Drosselventil aus, der eine Niveauregelung ermöglich und für die Samtigkeit der Dämpfung zuständig ist. Der Bypass 17"' bildet die Reibung in einem herkömmlichen Dämpfer ab und dämpft vorwiegend kleine Amplituden wie Fahrbahnrauhigkeiten.

In der Figur 4c ist eine Anordnung der Blow-off-Ventile 16', 17' in einem Verdrängerkolben oder aber in einem Drosselgehäuse 30 gezeigt, das in einen Verdrängerkolben eingesetzt werden kann. Analog können die Aufbauventile 16, 17 in dem Drosselgehäuse 30 eingebaut sein. Die Ventile 16, 16', 16", 17, 17', 17" sind in dem Drosselgehäuse 30 montiert und bilden so eine vorbereitbare Einheit, die fertig abgestimmt in einem Verdrängerkolben untergebracht werden kann.

In der Figur 5 ist ein alternatives Drosselprinzip gezeigt, bei der über Ringscheiben 50 aus Federstahl Überströmkanäle 6, 7 verschlossen werden. Die Ringscheiben 50 aus Federstahl werden unter Vorspannung gebracht und je nach Fließrichtung der Luft oder des Gasstromes öffnen sich die inneren bzw. äußeren Auflageseiten. Der Vorteil dieser Anordnung liegt in ihrem einfachen Aufbau. Problematisch ist, dass sich die Zug- und Druckstufe nicht unabhängig voneinander einstellen lassen.

In der Figur 6 ist das Prinzip einer Lineardrossel gezeigt, die aus einem gelochten Drosselkörper 61 besteht, in dem Überströmkanäle 6 eingearbeitet sind. Die Öffnungen der Überströmkanäle 6 sind auf der Zug- und Druckseite mittels Federscheiben 60, 67 geschlossen. Die Vorspannung der Federscheiben 60, 67 wird durch die Schraubenfedern 66, 68 ausgeübt, alternativ können Sternfedern eingesetzt werden.

Die Figur 7 zeigt eine Degressivdrossel mit einem Drosselkörper 71, in dem Überströmkanäle 6, 7 ausgebildet sind. Die Überströmkanäle 6, 7 sind in Zug- und in Druckrichtung durch Federscheiben 76, 77 verschlossen, die Federscheiben 76, 77 haben eine einstellbare, vorzugsweise voneinander verschiedene Vorspannung.

Sämtliche Federsysteme oder Drosselventilsysteme der Figuren 3-7 können alternativ oder in Kombination eingesetzt werden, um eine Gasfederdämpfereinheit 1 bereitzustellen.

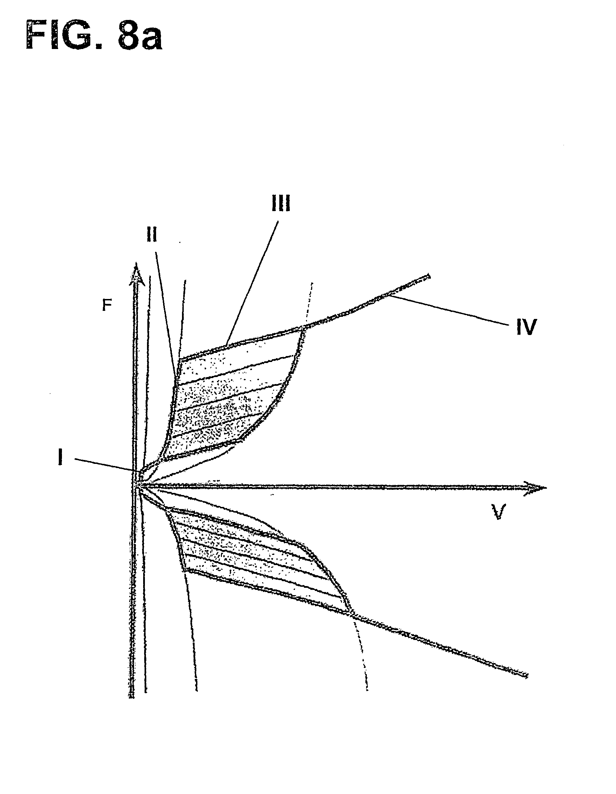

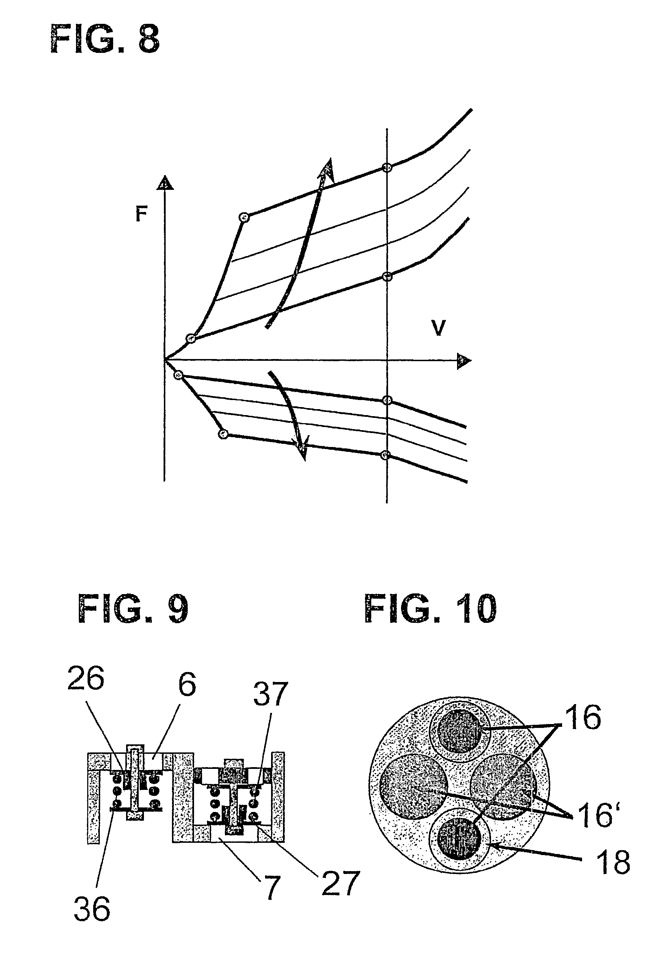

In den Figuren 8 und 8a sind Beispiele für Dämpfkraftkennfelder bzw. Dämpfkraftkennlinien gezeigt, bei denen die Drosselventile mit einer veränderbaren Vorspannung beaufschlagt sind, so dass die Anpassung der Dämpferkraftkennlinie und damit des Federungsverhaltens, beispielsweise eines Fahrzeuges, durchgeführt werden kann. Auch in den Figuren 8 und 8a sind oberhalb der Abszisse die Zugstufe und unterhalb der Abszisse die Druckstufe aufgetragen, wobei auch hier die Dämpferkraft F über die Dämpfergeschwindigkeit V aufgetragen ist. In der Figur 8 ist der mittels einer Vorspannungsänderung erreichbare Verstellbereich prinzipiell dargestellt, wobei die Vorteile der Vorspannungsregelung darin zu sehen ist, dass die Dämpferkraftkennlinie auch für große Dämpfergeschwindigkeiten angepasst werden kann. Eine Anpassung der Aufbaubedämpfung führt dabei nicht automatisch zu einer sehr steifen Kennlinie bei höheren Geschwindigkeiten, vielmehr kann bei geringen Geschwindigkeiten eine steife Kennlinie realisiert werden, deren Steigerung über die Dämpfergeschwindigkeit V verändert werden kann. Weil die Verstellung der Vorspannung direkt an der Drossel angreift, beispielsweise in dem ein elektromechanischer Akturator eine Stellschraube oder eine Stellmutter bewegt, über die die Federvorspannung verändert wird, ist die Verstellung schnell.

In der Figur 8a sind Dämpferkraftkennfelder gezeigt, die für die Zug- und Druckstufe unterschiedlich sind und durch eine Verstellung des Aufbauventils 16, 17 erhalten werden können. Dabei wird die Vorspannung der Ventile oder des Ventils unmittelbar variiert, beispielsweise durch einen Elektromotor oder durch eine Veränderung der Einstellung eines Magnetventils, so dass eine elektrische Verstelldrossel für einen Gasfederdämpfer bereitgestellt wird. Dadurch ist es möglich, sehr günstig die Zug- und Druckstufe unabhängig voneinander zu verstellen. Ebenfalls ist es möglich, das Magnetventil als Proportional-Ventil auszuführen, wodurch es ermöglicht wird, die Vorspannkraft unabhängig von dem Öffnungsweg der Drossel mit dem Strom exakt vorzugeben. Der Bereich I wird über den Bypass 17"' beeinflusst, während der Bereich II durch das Komfortventil gesteuert wird. Der Bereich der Aufbaudämpfung III in einem Frequenzbereich von 1 bis 1,5 Hz wird durch das verstellbare Aufbauventil 17 variiert, während die Achsdämpfung des Bereiches IV im Frequenzspektrum 10 bis 40Hz wirksam ist. Aufbaudämpfung und Achsdämpfung können somit unabhängig voneinander eingestellt und variiert werden.

In der Figur 9 ist ein schematischer Vorschlag der Ausgestaltung einer Schraubenfederdrossel gezeigt, ebenfalls mit zwei Überströmkanälen 6, 7 in Zug- und Druckrichtung wirksam, bei denen Ventilplättchen 26, 27 über Schraubenfedern 36, 37 unter Vorspannung in Ventilsitzen gehalten werden.

Figur 10 zeigt eine Draufsicht auf ein Drosselmodul mit insgesamt vier Ventilen, von denen zwei als Blow-off-Ventile 16' mit einem Durchmesser von mehr als 20mm als Achsventile und zwei weitere Ventile 16 mit Durchmessern zwischen 10 und 15 mm als Arbeitsventile für die Aufbaudämpfung ausgebildet sind. Darüber hinaus ist ein Magnetventil 18 für die Zug- und Druckstufe vorgesehen, mit dem sehr leicht eine Verstellung der Federkraftkennlinie erfolgen kann. Die Arbeitsventile 16 haben in Zugrichtung einen kleineren Öffnungsdurchmesser als in Druckrichtung, gleiches gilt für die Blow-off-Ventile 16'. Es besteht die Möglichkeit, die Arbeitsventile 16 und die Blow-off-Ventile 16' in einem Ventil zusammenzufassen, wobei der Öffnungsdruck für Zug im Bereich von 3 bis 5 bar liegt, für die Druckstufe im Bereich von 1,5 - 2,5 bar. Für Zug- und Druckrichtung sind Bypässe mit unterschiedlichen Strömungsquerschnitten vorgesehen, die vorzugsweise in den Arbeitsventilen 16 angeordnet sind. Durch die Anpassung der Dämpferkennlinie kann die Gasfeder-Dämpfer-Einheit an sich ändernde Fahrzeugparameter und Fahrsituationen angepasst werden, beispielsweise kann damit auf das Gewicht, eine Kurvenfahrt sowie Brems- und Verzögerungsvorgänge reagiert werden. Ebenfalls ist es möglich, das Fahrwerk nach den Wünschen der Fahrer einzustellen, beispielsweise als Sport- oder Komfortfahrwerk. Neben diesen adaptiven Konzepten kann auch auf Fahrbahnänderungen, Radschwingungen und dergleichen reagiert werden, in dem die Dämpferkennlinie dementsprechend verstellt wird.

Der Vorteil einer Schraubenfederdrossel besteht in einer relativ geringen Stellkraft, da das Verhältnis von genutzter Querschnittsfläche zur Stellfläche bei einer Schraubenfederdrossel ungefähr 1 beträgt.

## Patentansprüche

1. Gasfeder-Dämpfer-Einheit (1) in Fahrzeugen mit zumindest einem verschieblich gelagerten Verdrängerkolben (2) und zwei Verdrängerkammern (3, 4), deren Volumen sich je nach Verschieberichtung des Verdrängerkolbens (2) vergrößert oder verkleinert und die über Überströmkanäle (6, 7), in denen Drosselventile (16, 16', 16", 17, 17', 17", 17"') angeordnet sind, miteinander verbunden sind, **dadurch gekennzeichnet, dass** mehrere Drosselventile (16, 16', 16", 17, 17', 17", 17"') unterschiedlicher Ventilcharakteristik in einer Strömungsrichtung wirksam angeordnet sind und ein Drosselventil (17) für eine Dämpfung von Eigenfrequenzen im Bereich von 1 bis 1,5 Hz und ein anderes Drosselventil (17') für eine Dämpfung von Eigenfrequenzen im Bereich von 10 bis 40 Hz ausgelegt ist.

2. Gasfeder-Dämpfer-Einheit nach Anspruch 1, **dadurch gekennzeichnet, dass** die Drosselventile (16, 16', 16", 17, 17', 17"), die in einer Strömungsrichtung wirksam sind, bei unterschiedlichen Strömungsdrücken öffnen.

3. Gasfeder-Dämpfer-Einheit nach Anspruch 1 oder 2, **dadurch gekennzeichnet, dass** die Drosselventile (16, 16', 16", 17, 17', 17") für die Zug- und Druckstufe unterschiedliche Strömungsquerschnitte aufweisen.

4. Gasfeder-Dämpfer-Einheit nach Anspruch 3, **dadurch gekennzeichnet, dass** die Drosselventile (16, 16', 16") für die Druckstufe einen größeren Strömungsquerschnitt aufweisen als die Drosselventile (17, 17', 17") für die Zugstufe.

5. Gasfeder-Dämpfer-Einheit nach einem der voranstehenden Ansprüche, **dadurch gekennzeichnet, dass** die Drosselventile (16, 16', 16", 17, 17', 17") entgegen dem Strömungsdruck federnd gelagert sind und erst ab Erreichen eines bestimmten Strömungsdruckes öffnen.

6. Gasfeder-Dämpfer-Einheit nach Anspruch 5, **dadurch gekennzeichnet, dass** die in einer Strömungsrichtung wirksamen Drosselventile (16, 16', 16", 17, 17', 17") eine unterschiedliche Vorspannung aufweisen.

7. Gasfeder-Dämpfer-Einheit nach einem der voranstehenden Ansprüche, **dadurch gekennzeichnet, dass** die Drosselventile (16, 16', 16", 17, 17', 17") über Schraubenfedern (36, 37) in Ventilsitze gedrückt werden.

8. Gasfeder-Dämpfer-Einheit nach einem der voranstehenden Ansprüche, **dadurch gekennzeichnet, dass** die Drosselventile (16, 16', 16"; 17, 17', 17"), die in einer Strömungsrichtung wirksam sind, unterschiedliche Strömungsquerschnitte aufweisen.

9. Gasfeder-Dämpfer-Einheit nach einem der voranstehenden Ansprüche, **dadurch gekennzeichnet, dass** der Verdrängerkolben (2) doppeltwirkend ausgebildet in einem Zylinder (20) gelagert ist.

10. Gasfeder-Dämpfer-Einheit nach Anspruch 9, **dadurch gekennzeichnet, dass** die Drosselventile (16, 16', 16", 17, 17', 17", 17"') in dem Verdrängerkolben (2) gelagert sind.

11. Gasfeder-Dämpfer-Einheit nach einem der voranstehenden Ansprüche, **dadurch gekennzeichnet, dass** zwischen den Verdrängerkammern (3, 4) zumindest ein Drosselventil (17"') als Bypass ausgebildet ist.

12. Gasfeder-Dämpfer-Einheit nach Anspruch 11, **dadurch gekennzeichnet, dass** der Bypass (17"') in einem Drosselventil (16, 16', 16", 17, 17', 17") ausgebildet ist.

13. Gasfeder-Dämpfer-Einheit nach Anspruch 11 oder 12, **dadurch gekennzeichnet, dass** je Strömungsrichtung ein Bypass (17"') ausgebildet ist und der Bypass (17"') in der einen Strömungsrichtung einen größeren Strömungsquerschnitt als der Bypass (17"') in der anderen Strömungsrichtung aufweist.

14. Gasfeder-Dämpfer-Einheit nach einem der voranstehenden Ansprüche, **dadurch gekennzeichnet, dass** eine Verstelleinrichtung zur Einstellung der Ventilcharakteristik, insbesondere der Vorspannung zumindest eines Drosselventils (16, 16', 16", 17, 17', 17") vorgesehen ist.

15. Gasfeder-Dämpfer-Einheit nach Anspruch 14, **dadurch gekennzeichnet, dass** die Verstelleinrichtung einen elektromechanischen Aktuator aufweist.

16. Gasfeder-Dämpfer-Einheit nach Anspruch 14 oder 15, **dadurch gekennzeichnet, dass** eine Ventilfeder für das Drosselventil (16, 16', 16", 17, 17', 17") vorgesehen ist, der ein fremdkraftbetätigter Stellmechanismus zugeordnet ist, über den die Federvorspannung veränderbar ist.

17. Gasfeder-Dämpfer-Einheit nach Anspruch 16, **dadurch gekennzeichnet, dass** der Stellmechanismus als eine Stellschraube oder Stellmutter ausgebildet ist.

18. Gasfeder-Dämpfer-Einheit nach Anspruch 1, **dadurch gekennzeichnet, dass** mindestens drei Drosselventile (16, 16', 16", 17, 17', 17") je Strömungsrichtung vorgesehen sind.

19. Gasfeder-Dämpfer-Einheit nach Anspruch 1, **dadurch gekennzeichnet, dass** mindestens vier Drosselventile (16, 16', 16", 17, 17', 17", 17"') je Strömungsrichtung vorgesehen sind, von denen eines ein Bypassventil (17"') ist, ein Drosselventil (17) einen Frequenzbereich von 1 Hz bis 1,5 Hz bedient, ein Drosselventil (17') einen Frequenzbereich von 10 Hz bis 40 Hz bedient und ein Komfortventil (17") als vorgesteuerte Bohrung vorhanden ist.

20. Gasfeder-Dämpfer-Einheit nach Anspruch 1, **dadurch gekennzeichnet, dass** das Drosselventil (17) für den Frequenzbereich von 1 Hz bis 1,5 Hz und/oder das Drosselventil (17') für den Frequenzbereich von 10 Hz bis 40 Hz einen Verstellmechanismus aufweist.

## Claims

1. Pneumatic spring damper unit (1) in vehicles having at least one moveably mounted expeller piston (2) and two expeller chambers (3, 4) whose volumes are increased or decreased depending on the direction of movement of the expeller piston (2) and which are connected to one another by means of overflow ducts (6, 7) in which throttle valves (16, 16', 16", 17, 17', 17", 17"') are arranged, **characterized in that** a plurality of throttle valves (16, 16', 16", 17, 17', 17", 17"') with differing valve characteristics are arranged so as to be effective in one direction of flow and a throttle valve (17) is configured to damp natural frequencies in the range from 1 to 1.5 Hz, and another throttle valve (17') is configured to damp natural frequencies in the range from 10 to 40 Hz.

2. Pneumatic spring damper unit according to Claim 1, **characterized in that** the throttle valves (16, 16', 16", 17, 17', 17") which are effective in one direction of flow open under different flow pressures.

3. Pneumatic spring damper unit according to Claim 1 or 2, **characterized in that** the throttle valves (16, 16', 16", 17, 17', 17") for the extension stage and compression stage have different flow cross sections.

4. Pneumatic spring damper unit according to Claim 3, **characterized in that** the throttle valves (16, 16', 16") for the compression stage have a larger flow cross section than the throttle valves (17, 17', 17") for the extension stage.

5. Pneumatic spring damper unit according to one of the preceding claims, **characterized in that** the throttle valves (16, 16', 16", 17, 17', 17") are mounted in a sprung fashion counter to the flow pressure and do not open until a specific flow pressure is reached.

6. Pneumatic spring damper unit according to Claim 5, **characterized in that** the throttle valves (16, 16', 16", 17, 17', 17") which are effective in one direction of flow have differing bias.

7. Pneumatic spring damper according to one of the preceding claims, **characterized in that** the throttle valves (16, 16', 16", 17, 17', 17") are pressed into valve seats by means of helical springs (36, 37).

8. Pneumatic spring damper according to one of the preceding claims, **characterized in that** the throttle valves (16, 16', 16", 17, 17', 17") which are effective in one direction of flow have differing flow cross sections.

9. Pneumatic spring damper unit according to one of the preceding claims, **characterized in that** the expeller piston (2) is of double-acting design and is mounted in a cylinder (20).

10. Pneumatic spring damper unit according to Claim 9, **characterized in that** the throttle valves (16, 16', 16'', 17, 17', 17", 17"') are mounted in the expeller piston (2).

11. Pneumatic spring damper unit according to one of the preceding claims, **characterized in that** at least one throttle valve (17"') is embodied as a bypass between the expeller chambers (3, 4).

12. Pneumatic spring damper unit according to Claim 11, **characterized in that** the bypass (17"') is formed in a throttle valve (16, 16', 16", 17, 17', 17").

13. Pneumatic spring damper unit according to Claim 11 or 12, **characterized in that** a bypass (17"') is formed for each direction of flow, and the bypass (17"') in one direction of flow has a larger flow cross section than the bypass (17"') in the other direction of flow.

14. Pneumatic spring damper unit according to one of the preceding claims, **characterized in that** an adjustment device is provided for setting the valve characteristic, in particular for biasing at least one throttle valve (16, 16', 16", 17, 17', 17").

15. Pneumatic spring damper unit according to Claim 14, **characterized in that** the adjustment device has an electromechanical actuator.

16. Pneumatic spring damper unit according to Claim 14 or 15, **characterized in that** a valve spring is provided for the throttle valve (16, 16', 16", 17, 17', 17"), said spring being assigned an actuating mechanism which is activated by means of extraneous force and by means of which the spring bias can be varied.

17. Pneumatic spring damper unit according to Claim 16, **characterized in that** the adjusting mechanism is embodied as an adjusting screw or adjusting nut.

18. Pneumatic spring damper unit according to Claim 1, **characterized in that** at least three throttle valves (16, 16' , 16", 17, 17', 17") are provided for each direction of flow.

19. Pneumatic spring damper unit according to Claim 1, **characterized in that** at least four throttle valves (16, 16', 16", 17, 17', 17", 17"') are provided for each direction of flow and of which one is a bypass valve (17"'), one throttle valve (17) serves a frequency range from 1 Hz to 1.5 Hz, one throttle valve (17') serves a frequency range from 10 Hz to 40 Hz and one comfort valve (17'') is present as a pilot-controlled bore.

20. Pneumatic spring damper unit according to Claim 1, **characterized in that** the throttle valve (17) has an adjustment mechanism for the frequency range from 1 Hz to 1.5 Hz, and/or the throttle valve (17') has an adjustment mechanism for the frequency range from 10 Hz to 40 Hz.

## Revendications

1. Unité d'amortisseur/ressort à gaz (1) dans des véhicules automobiles, comprenant au moins un piston à déplacement positif (2) monté de manière déplaçable, et deux chambres à déplacement positif (3, 4) dont le volume augmente ou diminue en fonction du sens de déplacement du piston à déplacement positif (2) et qui sont connectées l'une à l'autre par le biais de canaux de débordement (6, 7) dans lesquels sont disposées des soupapes d'étranglement (16, 16', 16", 17, 17', 17", 17"'), **caractérisée en ce que** plusieurs soupapes d'étranglement (16, 16', 16", 17, 17', 17", 17"') de différentes caractéristiques de soupape sont disposées de manière active dans un sens d'écoulement et une soupape d'étranglement (17) est prévue pour un amortissement des fréquences propres dans la plage de 1 à 1,5 Hz et une autre soupape d'étranglement (17') est prévue pour un amortissement des fréquences propres dans la plage de 10 à 40 Hz.

2. Unité d'amortisseur/ressort à gaz selon la revendication 1, **caractérisée en ce que** les soupapes d'étranglement (16, 16', 16", 17, 17', 17") qui sont actives dans un sens d'écoulement s'ouvrent sous l'effet de différentes pressions d'écoulement.

3. Unité d'amortisseur/ressort à gaz selon la revendication 1 ou 2, **caractérisée en ce que** les soupapes d'étranglement (16, 16', 16", 17, 17', 17") présentent différentes sections transversales d'écoulement pour les étages d'aspiration et de pression.

4. Unité d'amortisseur/ressort à gaz selon la revendication 3, **caractérisée en ce que** les soupapes d'étranglement (16, 16', 16") pour les étages de pression présentent une plus grande section transversale d'écoulement que les soupapes d'étranglement (17, 17', 17") pour les étages d'aspiration.

5. Unité d'amortisseur/ressort à gaz selon l'une quelconque des revendications précédentes, **caractérisée en ce que** les soupapes d'étranglement (16, 16', 16", 17, 17', 17") sont montées à ressort à l'encontre de la pression d'écoulement et ne s'ouvrent qu'à partir d'une pression d'écoulement déterminée.

6. Unité d'amortisseur/ressort à gaz selon la revendication 5, **caractérisée en ce que** les soupapes d'étranglement (16, 16', 16", 17, 17', 17") présentent une précontrainte différente.

7. Unité d'amortisseur/ressort à gaz selon l'une quelconque des revendications précédentes, **caractérisée en ce que** les soupapes d'étranglement (16, 16', 16", 17, 17', 17") sont pressées par le biais de ressorts à boudin (36, 37) dans des sièges de soupape.

8. Unité d'amortisseur/ressort à gaz selon l'une quelconque des revendications précédentes, **caractérisée en ce que** les soupapes d'étranglement (16, 16', 16", 17, 17', 17") qui sont actives dans le sens de l'écoulement présentent différentes sections transversales d'écoulement.

9. Unité d'amortisseur/ressort à gaz selon l'une quelconque des revendications précédentes, **caractérisée en ce que** le piston à déplacement positif (2) est à double action et est monté dans un cylindre (20).

10. Unité d'amortisseur/ressort à gaz selon la revendication 9, **caractérisée en ce que** les soupapes d'étranglement (16, 16', 16", 17, 17', 17", 17"') sont montées dans le piston à déplacement positif (2).

11. Unité d'amortisseur/ressort à gaz selon l'une quelconque des revendications précédentes, **caractérisée en ce qu'**au moins une soupape d'étranglement (17"') est réalisée sous forme de dérivation entre les chambres à déplacement positif (3, 4).

12. Unité d'amortisseur/ressort à gaz selon la revendication 11, **caractérisée en ce que** la dérivation (17"') est réalisée dans une soupape d'étranglement (16, 16', 16", 17, 17', 17").

13. Unité d'amortisseur/ressort à gaz selon la revendication 11 ou 12, **caractérisée en ce que** pour chaque sens d'écoulement, une dérivation (17"') est réalisée, et la dérivation (17"') présente, dans un sens d'écoulement, une section transversale d'écoulement plus grande que la dérivation (17"') dans l'autre sens d'écoulement.

14. Unité d'amortisseur/ressort à gaz selon l'une quelconque des revendications précédentes, **caractérisée en ce qu'**il est prévu un dispositif de réglage pour l'ajustement d'une caractéristique de soupape, en particulier de la précontrainte d'au moins une soupape d'étranglement (16, 16', 16", 17, 17', 17").

15. Unité d'amortisseur/ressort à gaz selon la revendication 14, **caractérisée en ce que** le dispositif de réglage présente un actionneur électromécanique.

16. Unité d'amortisseur/ressort à gaz selon la revendication 14 ou 15, **caractérisée en ce qu'**il est prévu un ressort de soupape pour la soupape d'étranglement (16, 16', 16", 17, 17', 17"), lequel est associé à un mécanisme de commande actionné par une force extérieure, par le biais duquel la précontrainte du ressort peut être modifiée.

17. Unité d'amortisseur/ressort à gaz selon la revendication 16, **caractérisée en ce que** le mécanisme de commande est réalisé sous forme de vis de commande ou d'écrou de commande.

18. Unité d'amortisseur/ressort à gaz selon la revendication 1, **caractérisée en ce qu'**au moins trois soupapes d'étranglement (16, 16', 16", 17, 17', 17") sont prévues pour chaque sens d'écoulement.

19. Unité d'amortisseur/ressort à gaz selon la revendication 1, **caractérisée en ce qu'**au moins quatre soupapes d'étranglement (16, 16', 16", 17, 17', 17", 17"'), sont prévues pour chaque sens d'écoulement, dont l'une est une soupape de dérivation (17"', 17", 17"'), une soupape d'étranglement (17) commande la plage de fréquences de 1 Hz à 1,5 Hz, une soupape d'étranglement (17') commande la plage de fréquences de 10 Hz à 40 Hz et une soupape de confort (17") est prévue en tant qu'alésage précommandé.

20. Unité d'amortisseur/ressort à gaz selon la revendication 1, **caractérisée en ce que** la soupape d'étranglement (17) prévue pour chaque sens d'écoulement pour la plage de fréquences de 1 Hz à 1,5 Hz et/ou la soupape d'étranglement (17') pour la plage de fréquences de 10 Hz à 40 Hz présentent un mécanisme de réglage.
